Europäisches Patentamt

European Patent Office

Office européen des brevets

(19)

(11) Publication number: **0 014 413**
**B1**

(12) **EUROPEAN PATENT SPECIFICATION**

(45) Date of publication of patent specification: **14.07.82**

(51) Int. Cl.³: **B 01 J 23/34, B 01 J 37/00**

(21) Application number: **80100431.8**

(22) Date of filing: **28.01.80**

(54) Process of producing rare earth-manganese oxidation catalysts.

(30) Priority: **01.02.79 US 8591**

(43) Date of publication of application:
**20.08.80 Bulletin 80/17**

(45) Publication of the grant of the patent:
**14.07.82 Bulletin 82/28**

(84) Designated Contracting States:
**AT BE CH DE FR GB IT LU NL SE**

(56) References cited:
**US - A - 3 780 126**
**US - A - 4 001 371**

(73) Proprietor: **Carus Corporation**
**1500 Eighth Street**
**LaSalle, Illinois (US)**

(72) Inventor: **Mein, Peter Guenter**
**1516 Campbell Avenue**
**LaSalle Illinois 61301 (US)**
Inventor: **Reidies, Arno Helmut**
**1137 Fourth Street**
**LaSalle Illinois 61301 (US)**

(74) Representative: **Patentanwälte Dipl.-Ing. A. Grünecker, Dr.-Ing. H. Kinkeldey, Dr.-Ing. W. Stockmair, et al,**
**Dr. rer. nat. K. Schumann, Dipl.-Ing. P. Jakob, Dr. rer. nat. G. Bezold Maximilianstrasse 43**
**D-8000 München 22 (DE)**

Courier Press, Leamington Spa, England.

## Process of producing rare earth-manganese oxidation catalysts

Oxidation catalysts containing manganese and a polyvalent metal, such as copper, cobalt, or silver, have been in commercial use for many years. They are referred to as "Hopcalites". The Hopcalite catalyst containing copper with manganese has been commonly used in gas masks for oxidation or carbon monoxide. Hopcalites may be formed by coprecipitation of $MnO_2$ with $Cu(OH)_2$ or other polyvalent metal hydroxide. (See, for example, United States patent 1,345,323 of 1920). Manganese catalysts containing copper or other polyvalent metal have also been prepared from a solution of the metal salt and potassium permanganate in the presence of hydrogen peroxide. (United States patent 1 971 168 (1934), and United States patent 1 995 353 (1935).) The resulting catalyst is an acid manganate of the copper or other polyvalent metal, such as, for example, $Cu(HMnO_3)_2$. As far as is known, such acid manganate catalysts have not found commercial applications.

Dodman et al in U.S. patent 3 700 605 (1972) describe a procedure for preparing a manganese catalyst by first forming a manganese oxide precipitate from potassium permanganate in the presence of alkali metal hydroxide. The recovered precipitate is resuspended in water, and an aqueous solution of a salt of a polyvalent metal is introduced into the suspension to react therewith. The patent recommends the use of cobalt, copper, silver or lead ions to replace the alkali metal in the precipitate. This ion exchange reaction is described as being carried out at ambient temperature (e.g. 20°C). No pH adjustment is disclosed. Dodman et al propose that an inert insoluble substance (e.g. kieselguhr or silica) should be suspended in the potassium permanganate solution as it is converted to the manganese dioxide precipitate, thereby providing a catalyst support.

Dodman et al did not propose the use of "by-product" manganese dioxide as a starting material for catalyst preparation. However, the by-product manganese dioxide resulting from the use of potassium permanganate to oxidize organic substances under alkaline conditions is chemically similar to the manganese dioxide precipitate prepared by Dodman et al. Chemically, they are both alkali metal delta manganese dioxide hydrate. During the course of the experimental work leading to the present invention, it was found that aqueous solutions of cobalt or copper nitrate could be reacted with by-product manganese dioxide under the conditions described by Dodman et al and that the resulting products had catalytic activity for hydrocarbon oxidation. However, for certain applications (viz. paint drying ovens) the cobalt or copper catalysts are not as efficient and do not have as long catalyst life as desirable.

When an attempt was made to react a solution of cerium nitrate with by-product manganese dioxide under the conditions described by Dodman et al, the resulting product still contained an appreciable amount of alkali metal and was not suitable for use as an oxidation catalyst. Further discoveries lead to the development of a process for producing rare earth-manganese oxidation catalysts of superior properties. This catalyst and its method of production are the subject matter of this application.

The present invention provides a means for converting by-product manganese dioxide (which presently has little or no commercial use) to a highly desirable rare earth-manganese oxidation catalyst. For example, the resulting rare earth-manganese catalysts perform efficiently for the oxidation and deodorization of exhaust gases from paint drying ovens, such as those used in the automobile industry. The catalysts of this invention are therefore believed to be of great value in connection with air pollution control, and to have a wide field of application for oxidation of organic materials in industrial waste gases before they are discharged to the atmosphere.

The starting material for practicing the present invention can be generically described as alkali metal delta manganese dioxide hydrate. The alkali metal content of the manganese dioxide may be potassium, sodium, or other alkali metal, but will usually comprise both sodium and potassium. When the manganese dioxide is produced by the oxidation of an organic substance under conditions when the alkalinity is provided by sodium hydroxide, the resulting manganese dioxide will contain both sodium and potassium. Such by-product $MnO_2$ may contain from 0.55 to 0.65 moles of total alkali metal per mole of Mn, about 0.5 moles of which are bound alkali which cannot be washed out with water. A representative analysis of such by-product $MnO_2$ is 47.5% $MnO_2$, 2.8% $K_2O$, 8.6% $Na_2O$, 41% $H_2O$ (the sodium and potassium being expressed as oxides).

Although the use of by-product $MnO_2$ is preferred, if desired, potassium permanganate ($KMnO_4$) can be converted into alkali metal delta manganese dioxide. If other alkali metal ions (viz. lithium ions) are present during the reduction of the potassium permanganate to manganese dioxide, the resulting product will also contain them.

By-product manganese dioxide is a fine particulate solid, the particles having an average size of approximately 20 microns in diameter. These particles can readily be suspended in an aqueous reaction solution, and maintained in suspension by low energy mixing. For the purpose of the present invention, it is therefore convenient to suspend the manganese dioxide in an aqueous solution containing the rare earth ions to be reacted with the manganese dioxide for the replacement of the alkali metal by an ion exchange-type reaction. However, alkali metal delta manganese dioxide hydrate is strongly alkaline, giving a pH in the range of 11—14 when suspended in water. It has been found that alkaline pH conditions are undesirable for the replacement reaction. At alkaline pH's the reaction cannot be carried to completion. Further, it is desirable to avoid the formation of hydroxide precipitates of the rare earth, and these can form at low alkaline pH's.

To produce the rare earth manganese oxidation catalyst of the present invention, it is important to exercise pH control, and to substantially avoid alkaline conditions during the reaction period. Preferably, the manganese oxide is added to a solution of the rare earth ions in such a manner as to prevent the pH of the resulting suspension from becoming alkaline. Even though the salts of the rare earths, such as the nitrate salts, form acid solutions in water, it will usually be necessary to add acid to prevent the alkaline manganese dioxide from causing the suspension pH to rise about 7.0. In general, it is desirable to employ a starting pH for the suspension of from 5.0 to 7.0, such as a pH of about 5.5 to 6.5. If the starting pH is too strongly acid, such as pH's substantially below 5.0, the hydrogen ion will compete with the rare earth ions for the replacement, and the resulting product will be less desirable for use as an oxidation catalyst. The pH control by acid addition preferably uses the same acid as the rare earth salt anion (nitric acid for nitric salts, etc), thereby avoiding introducing other anions, but other acids can be used.

For promoting the reaction, it is also desirable to apply heat to the reacting solution. It has been found that the reaction proceeds very slowly at ordinary room temperature. For example, replacement of the alkali by cerium ion using a reaction temperature of 25°C was found to take from 210 to 220 hours to approach completion. However, when the reaction solution is heated at a temperature of 35°C, only 20 to 30 hours is required for completion of the reaction, the alkali metal being replaced by the rare earth metals. In general, therefore, it is desired to employ a reaction temperature of at least 30°C. Higher temperatures can be employed up to at least 75°C with a further reduction in reaction time.

It is also desirable to use sufficient solution so that the particles of manganese dioxide are easily maintained in suspension. For example, from 2.5 to 3.5 parts of the solution can be used per part by weight of the by-product $MnO_2$. The reacting solution preferably should contain an excess of the rare earth metal ions over that required for complete replacement of the alkali metal. For example, on a molar basis, the reacting solution may contain from 0.2 to 0.35 moles of rare earth ion per mole of manganese metal. The concentration of the ions in the reacting solution is not critical, but, in general, it will be desirable to avoid very dilute solutions or saturated solutions.

The rare earths to be used preferably belong to the ceria subgroup of rare earths. This group includes cerium, lanthanum, neodymium, praseodymium, and samarium. For preparing the catalyst from individual rare earths, cerium or lanthanum are preferred. However, desirable results can be obtained by using mixtures of ceria group rare earths, such as those containing principally cerium, lanthanum and neodymium. The rare earths are used in the form of their soluble salts. For example, nitrate salts give excellent results. Other soluble salts may be used. It is desirable to avoid salt anions which may adversely effect the catalysts. For example, the presence of chloride ions is believed to be less desirable for this reason. From the standpoint of the desired reaction, the only requirement is that the solution contain the rare earth ions. Other rare earths, such as yttrium or others of the yttria subgroup, can also be used in the process of this invention, but, in general, are not as desirable as the rare earths of the ceria subgroup.

For the purpose of the present invention, the exchange reaction should be continued until the reaction product contains not over 0.05 moles of bound alkali metal per mole of manganese. The term "bound" alkali metal refers to the alkali metal remaining after the reaction product has been thoroughly washed with water. Such washing will remove the free alkali metal ions liberated by the reaction. For optimized catalytic activity, it is preferred that the reaction product contain not over 0.030 moles of bound alkali metal per mole of manganese. The rare earth content of the product on completion of the replacement reaction can contain from one mole of rare earth per 5 to 7 moles of manganese. However, a content of approximately one mole of rare earth per six moles of manganese is preferred.

For example, on that basis, the empirical formula of the dehydrated product prepared from certain ions is: $Ce_2O_3$ $12MnO_2$. As produced and prior to drying, the rare earths are believed to be in hydroxide form, and the rare earths manganese oxide complex is also associated with water of hydration.

After the suspension has been formed at the pH of 5.0 to 7.0, as described above, and the replacement reaction is under way, it has been found that the pH of the suspension decreases as the reaction proceeds. Therefore, during the course of the reaction, it is not necessary to add additional acid to maintain the pH below 7.0. Further, as the reaction proceeds, the pH can be permitted to drop below 5.0. The final pH's on completion of the reaction of as low as 2.5 to 3.5 do not interfere with the desired completion of the reaction. In general, the pH of the suspension on completion of the reaction will approach the pH of the rare earth salts when dissolved in water (without manganese dioxide). Summarizing, after the initial adjustment of the pH of the suspension of 5.0 to 7.0, the reaction will proceed under acidic pH conditions, the pH gradually dropping during the reaction and without the need for the addition of further pH adjusting agents.

On completion of the reaction, the particles of the reaction product are separated from the reaction solution. Next the recovered material is thoroughly washed with water to remove any free alkali metal. It is then ready for further processing. If the product is washed on the filter, the washed filter cake is ready for preparing the catalyst in pellet form.

The product is preferably prepared in the form of dried porous catalytic pellets. To accomplish this, the washed reaction product can be mixed with a suitable binder and pelletized. It has been found that binders which are capable of absorbing water are particularly desirable. For example, the binder may be water-containing bentonite. More specifically, the reaction product in hydrated form is mixed with water and bentonite to provide a paste which is extruded to form pellets. The paste may contain from 0.5 to 1.5 parts by weight of bentonite per part of manganese (Mn) in the reaction product. For example on an equal parts basis (1 part bentonite per part Mn), the paste will contain about 30% by weight of bentonite on a dry basis. In preparing the paste water is added to give a total water content of about 35—45% by weight. The paste is mixed and kneaded until it is homogenous. The pellets produced in this manner may be of any shape, but cylindrical pellets can be easily formed by extrusion and are advantageous. Such pellets may conveniently have a diameter of about 0.3 to 0.7 cm, and a length of 1.25 to 2.5 cm. From the cylindrical ribbons in which the paste is extruded, pellets can be formed of any desirable length.

The pellets are then dried to a porous non-agglomerating condition. The drying is preferably carried out in such a way as to avoid severe shrinkage or breakage of the pellets. For example, the extruded pellets are preferably dried slowly at a temperature of from 50 to 60°C in a moving airstream of moderate flow rate from 8 to 10 hours. This gradual drying will cause the free water to slowly evolve, creating highly porous pellets without disrupting the pellet structure. After the initial drying, most of the water will have been removed. For example, if the extruded pellets contain 40% total water by weight, on completion of the initial drying, they may contain only about 10% water (as bound water). The final drying may be conveniently carried out at the time the catalyst is activated for use. This will further increase the porosity of the pellets. For example, the pellets may be heated at a temperature of 70 to 100°C

in a high velocity airstream for 5 to 10 minutes to remove the bound water. This will then complete the activation of the catalyst. The initial drying can be combined with the final drying and activation by heating the pellets in a moving airstream for 1 to 4 hours at a temperature of 150—160°C. The procedure described will produce catalytic pellets of maximized, microscopic voids, which are desirable for optimizing catalytic activity.

The process of this invention is further illustrated by the following specific examples:

## Example 1

83 g Ce $(NO_3)_3.6 H_2O$ is added to 217 to 252 ml. water. When dissolved, 100 g by-product $MnO_2$ (47.46% $MnO_2$, 2.75% $K_2O$, 8.58% $Na_2O$, and 41.2% $H_2O$) is added to the solution in a manner that the pH will be maintained between 5 and 6. A pH up to 7.0 can be used, but cerium (III) hydroxide precipitates at pH 7.4, and such precipitation should be avoided. The pH is controlled with nitric acid additions as required. The temperature is maintained at 35°C, and the mixture is moderately agitated for 20 to 30 hours. Then, it is filtered and the solids are washed with water until all soluble substances are removed. There is obtained about 100 g of a semi-wet product having as a typical composition (expressed as oxides): 47.5% $MnO_2$, 15.0% $Ce_2O_3$, 0.35% $Na_2O$, 0.5% $K_2O$, and 36 to 37% $H_2O$. The apparent formula of this composition is $Ce_2O_3.12 MnO_2 \times H_2O$. This product without further processing is ready for pelletizing.

## Example II

83 g La $(NO_3)_3.6 H_2O$ is added to 217 to 253 ml water. When dissolved, 100 g of the by-product $MnO_2$ of Example I is added to the solution in a manner that the pH will not be lower than 6 nor higher than 7. The pH is controlled with nitric acid. The temperature is adjusted to 35°C and the reaction mixture is moderately agitated for 20 to 30 hours. Then it is filtered and the solids are washed with water until all soluble substances are removed. There is obtained about 100 g of a semi-wet product having as typical composition (expressed as oxides): 14.9% $La_2O_3$, 46.5% $MnO_2$, 0.3% $K_2O$, 0.5% $Na_2O$, and 36 to 37% $H_2O$. The apparent formula of the compound is $La_2O_3.12 MnO_2.xH_2O$. This product is ready for pelletizing as is.

## Example III

83 g of mixed ceria group rare earth nitrates (as the hydrates) are added to 217 to 253 ml. water. The rare earth (RE) ion mixture has the approximate composition (expressed as oxides): 48% $CeO_2$, 20% $La_2O_3$, 18% $Nd_2O_3$, and 9 to 12% other rare earth metals of the ceria group. (Ce = cerium; La = lanthanum; and Nd = neodymium). When dissolved, 100 g of the by-product $MnO_2$ of Example I is added to the solution in a manner that the pH will not be lower than 5 or higher than 6. The pH is controlled with nitric acid. The mixture is moderately agitated for 20 to 30 hours. Then it is filtered and the solids are washed with water until all soluble substances are removed. There is obtained about 100 g of a semi-wet product having as a typical compositon (expressed as oxides): 47.5% $MnO_2$, 15.3% $RE_2O_x$, 0.5% $K_2O$, 0.1% $Na_2O$, and 36 to 37% $H_2O$. This product is ready for pelletizing.

The products of Examples I to III contain approximately 0.03 moles of total alkali per mole of Mn, and approximately one mole of rare earth metal per six moles of Mn.

Example IV

The products produced by the foregoing Examples I, II and III can be pelletized as follows:

The reaction product is mixed with one pound bentonite per pound manganese. Water is added to provide a total content of 40%. The mixture is kneaded until a homogeneous paste is obtained. The paste is then extruded to form pellets.

The extruded pellets are dried at a temperature of from 50 to 60°C in a moving airstream of moderate flow rate from 2 to 10 hours. The gradual drying will result in the removal of the free water. After the initial drying, most of the water will have been removed. For example, if the pellets as extruded contained 40% total water by weight, in completion of the initial drying they can still contain between 8 and 12% water, as bound water. The final drying may be conveniently carried out at the time the catalyst is activated for use. In this activation step, the catalyst is quickly heated above 100°C in a high velocity airstream for 5 to 10 minutes to remove the bound water. Alternatively, the initial drying and the activation of the extruded pellets can be combined by removing both the free and bound water by heating between 150 and 160°C for from 1 to 4 hours in a moving airstream. In this procedure, the extruded pellets are preferably loosely packed. It has been found that during the drying it is advantageous to have an airstream passing over the product (as opposed to stable air). Catalyst product dried in static air shows lower activity.

Example V

As an alternative to the procedure of Example IV and based on present information, the best mode of pelletizing the rare earth-manganese oxidation catalysts is to utilize hydrated alumina (AlO(OH)) instead of bentonite. Any form of hydrated alumina suitable for use as a catalyst carrier can be employed, such as the commercial product, alpha alumina, which is the alpha form of hydrated alumina. More specifically, the catalytic pellets can be prepared from a paste comprising a mixture of the hydrated reaction product, such as the products produced by Examples I, II and III, and partially peptized hydrated alumina. The paste mixture is dried to remove water.

Hydrated alumina is a known catalyst support material and is available commercially. For example, alpha alumina can be employed as supplied by Conoco Chemicals Division, Continental Oil Company, Houston, Texas. This hydrated alpha alumina product typically contains 74—75% by weight $Al_2O_3$, and has boehmite crystal structure, which can be converted to gamma alumina by calcining for three hours at 900°F. Such alumina may be formed into pellets by various procedures involving partial peptization, wherein there is partial reconversion of the solid alumina to a gel state. One procedure involves the addition of a peptizing acid, such as nitric acid, but other procedures can be used.

The hydrated alumina may be combined with the catalytic reaction product in amounts ranging from 0.25 to 2 parts of $Al_2O_3$ per part of manganese. For example, 1 part of alumina (74—75% $Al_2O_3$) per part of contained Mn is combined with the reaction product of Example I, II or III. This corresponds approximately to a $Al_2O_3$ content of the mixture of 25—30% by weight on a dry basis. The water content of the resulting paste may range from about 35 to 45% by weight, the reaction product thereby being in hydrated form.

The paste prepared as described can be peptized by kneading or mulling for one to two hours. This results in partial peptization of the hydrated alumina, sufficient alumina gel being formed to act as a binder. Care should be taken not to overpeptize the material by excessive mulling times or by the addition of too much acid, if acid is employed to shorten the peptization time. For example, 12 to 13 grams of $HNO_3$ (100%) can be added per pound of Catapal SB, and the required partial peptization completed by mulling for five to fifteen minutes. Further details of the procedure are included in the following illustrative embodiment.

Damp catalytic reaction product (viz. from Example I, II or III) is mixed with one lb of alumina per lb of contained manganese. Twelve grams of $HNO_3$ (100%) diluted with water is added per lb of the alumina. The total water added is such that the overall moisture content of the mixture amounts to 40—45%. After kneading for 5—15 minutes, the homogeneous paste is extruded to form pellets. The damp pellets are first dried for 10—20 hours at 100°C in a low to moderate velocity airstream. This will remove most of the "free" water and leave about 8—12% as "bound" water. In the final preparation step, the catalyst is calcined for 3 hours at 480°C in a dynamic airstream. The pelleted product is now essentially anhydrous and ready for use.

As compared with the pelleted product of Example IV, catalytic pellets prepared as described in this example provide certain advantages. Catalytic pellets are resistant to liquid water, and do not soften or disintegrate. Further, the crush strength is improved. Catalytic activity is also greater due to higher surface area and greater pour volume. The product has increased tolerance to high temperatures up to about 535°C. Also, it appears that the product is somewhat less susceptible to sulfur poisoning, and that the useable ratios of catalyst paste to binder permits the pelleted product to contain lower percentages of active material without loss of efficiency.

**Claims**

1. A process of producing a rare earth-manganese oxidation catalyst by ion exchange reaction, characterized by the following steps:

(a) forming a suspension of finely-divided alkali metal delta manganese dioxide hydrate in an aqueous solution containing rare earth metal salt ions, said suspension having an initial pH of from 5,0 to 7,0, the rare earth metal ions being provided by one or more rare earths of the ceria subgroup;

(b) reacting said manganese dioxide with said rare earth metal ions at a temperature of at least 30°C and under acidic pH conditions;

(c) continuing said reaction until the manganese reaction product contains not over 0,05 moles of bound alkali metal per mole of manganese and at least one mole of total ceria subgroup rare earth metal per 5 to 7 moles of manganese;

(d) separating said reaction product from said aqueous solution; and

(e) preparing dried porous catalytic pellets from said reaction product.

2. A process of claim 1 characterized in that said manganese dioxide is sodium and/or potassium containing by-product manganese dioxide resulting from the permanganate oxidation of organic substances.

3. A process of claim 1 or claim 2 characterized in that said rare earth metal ions are cerium ions.

4. A process of claim 1 or 2 characterized in that said rare earth metal ions are lanthanum ions.

5. A process of claim 1 or claim 2 characterized in that said rare earth metal ions comprise a mixture of ceria subgroup ions including at least cerium, lanthanum and neodymium ions.

6. A process of claim 1 or claim 2 characterized in that said reaction is carried out at a temperature of from 30 to 75°C and at a pH of from 5.5 to 6.5.

7. A process of claim 1 or claim 2 characterized in that said reaction is continued until said reaction product contains not over 0.03 moles of bound alkali metal per mole of manganese.

8. A process of claim 1 or claim 2 characterized in that said reaction is continued until said reaction product contains approximately one mole of total ceria group rare earth metal per each six moles of manganese.

9. A process of claim 1 or claim 2 characterized in that said ceria group rare earth metal ions are composed predominantly of cerium, lanthanum and neodymium ions.

10. A process of claim 1 characterized in that said catalytic pellets are prepared from a paste comprising a mixture of said reaction product in hydrated form and water-containing bentonite, said paste being extruded to form pellets, and said pellets being dried to a porous non-agglomerating condition.

11. A process of claim 1 characterized in that said catalytic pellets are prepared from a paste comprising a mixture of said reaction product in hydrated form and a partially peptized hydrated alumina catalyst carrier, said paste being dried to remove water.

12. A process of claim 1 characterized in that said dried porous catalytic pellets are prepared from said reaction product by forming a paste from a mixture of said reaction product in hydrate form and partially peptized particulate hydrated alpha alumina, extruding said paste to form pellets, and drying and calcining said pellets to remove water and to convert said hydrated alpha alumina to gamma alumina.

**Revendications**

1. Procédé de fabrication d'un catalyseur d'oxydation terre rare-manganèse par réaction d'échange d'ions, caractérisé par les mesures suivantes:

(a) on prépare une suspension d'hydrate de dioxyde de manganèse delta contenant un métal alcalin finement divisé, dans une solution aqueuse contenant des ions de sels métalliques de terre rare cette suspension ayant un pH initial compris entre 5,0 et 7,0, les ions métalliques de terre rare étant fournis par une ou plusieurs terres rares du sous-groupe du cérium;

(b) on fait réagir le dioxyde de manganèse avec les ions métalliques de terre rare à une température d'au moins 30°C et dans des conditions de pH acides;

(c) on continue la réaction jusqu'à ce que le produit de la réaction manganèse ne contienne pas plus de 0,05 moles de métal alcali lié par mole de manganèse, et au moins une mole au total de métal terre rare du sous-groupe du cérium pour 5 à 7 moles de manganèse;

(d) on sépare le produit de la réaction de la solution aqueuse; et

(e) on prépare des boulettes catalytiques, sèches et poreuses à partir du produit de la réaction.

2. Procédé selon la revendication 1, caractérisé en ce que le dioxyde de manganèse est un sous-produit de dioxyde de manganèse contenant du sodium et/ou du potassium, résultant de l'oxydation au permanganate de substances organiques.

3. Procédé selon la revendication 1 ou la revendication 2, caractérisé en ce que les ions métalliques de terre rare sont des ions cérium.

4. Procédé selon la revendication 1 ou la revendication 2, caractérisé en ce que les ions métalliques de terre rare sont des ions lanthane.

5. Procédé selon la revendication 1 ou la revendication 2, caractérisé en ce que les ions métalliques de terre rare comprennent un mélange d'ions du sous-groupe du cérium comprenant au moins des ions cérium, lanthane et néodyme.

6. Procédé selon la revendication 1 ou la revendication 2, caractérisé en ce que la réaction est réalisée à une température comprise entre 30° et 75°C pour un pH compris entre 5,5 et 6,5.

7. Procédé selon la revendication 1 ou la revendication 2, caractérisé en ce que la réaction est poursuivie jusqu'à ce que le produit de la réaction contienne moins de 0,03 mole de métal alcalin lié par mole de manganèse.

8. Procédé selon la revendication 1 ou la revendication 2, caractérisé en ce que la réaction est poursuivie jusqu'à ce que le produit de la réaction contienne approximativement une mole au total de métal terre rare du groupe du cérium pour six moles de manganèse.

9. Procédé selon la revendication 1 ou la revendication 2, caractérisé en ce que les ions métalliques de terre rare du groupe du cérium sont constitués principalement par des ions cérium, lanthane et néodyme.

10. Procédé selon la revendication 1, caractérisé en ce que les boulettes catalytiques sont préparées à partir d'une pâte comprenant un mélange du produit de la réaction sous forme hydratée et de bentonite contenant de l'eau, cette pâte étant extrudée pour former des boulettes, lesdites boulettes étant séchées de manière à se présenter sous une forme poreuse ne s'agglomérant pas.

11. Procédé selon la revendication 1, caractérisé en ce que les boulettes catalytiques sont préparées à partir d'une pâte comprenant un mélange du produit de réaction sous forme hydratée et un support catalytique à base d'alumine hydraté partiellement peptisée, cette pâte étant séchée pour éliminer l'eau.

12. Procédé selon la revendication 1, caractérisé en ce que les boulettes catalytiques, poreuses, sèches sont préparées à partir du produit de la réaction en formant une pâte avec un mélange du produit de la réaction sous forme hydratée et de particules d'alumine alpha hydratée, partiellement peptisée, en extrudant la pâte pour former des boulettes, et en séchant et calcinant les boulettes pour éliminer l'eau et convertir l'alumine alpha hydratée en alumine gamma.

**Patentansprüche**

1. Verfahren zur Herstellung eines Seltenerd-Mangan- Oxidationskatalysators durch Ionenaustauschreaktion, dadurch gekennzeichnet, daß man

a) eine Suspension aus feinverteiltem Alkalimetalldelta-mangandioxid-hydrat in einer wässrigen Lösung, die Seltenerd-Metallsalzionen enthält, bildet, wobei diese Suspension einen Anfangs- pH von 5,0 bis 7,0 aufweist und die Seltenerd-Metallionen durch eine oder mehrere Seltenerden der Ceroxid-Untergruppe gebildet werden;

b) das Mangandioxid mit den Seltenerd-Metallionen bei einer Temperatur von mindestens 30°C und unter sauren pH-Bedingungen umsetzt;

c) die Umsetzung so lange fortsetzt, bis das Mangan-Reaktionsprodukt nicht über 0,05 Mol gebundenes Alkalimetall pro Mol Mangen und mindestens 1 Mol gesamtes Seltenerdmetall der Ceroxid -Untergruppe pro 5 bis 7 Mol Mangan enthält;

d) das Reaktionsprodukt aus der wässrigen Lösung abtrennt; und

e) aus dem Reaktionsprodukt getrocknete poröse Katalysator-Pellets herstellt.

2. Verfahren nach Anspruch 1, dadurch gekennzeichnet, daß das Mangandioxid ein Natrium und/oder Kalium enthaltendes Mangandioxid-Nebenprodukt ist, das bei der Permanganat-Oxidation organischer Substrate erhalten wird.

3. Verfahren nach Anspruch 1 oder 2, dadurch gekennzeichnet, daß die Seltenerd-Metallionen Cerionen sind.

4. Verfahren nach Anspruch 1 oder 2, dadurch gekennzeichnet, daß die Seltenerd-Metallionen Lanthanionen sind.

5. Verfahren nach Anspruch 1 oder 2, dadurch gekennzeichnet, daß die Seltenerd-Metallionen eine Mischung von Ionen der Ceroxid -Untergruppe, einschließlich mindestens Cer-, Lathan- und Neodymionen, umfassen.

6. Verfahren nach Anspruch 1 oder 2, dadurch gekennzeichnet, daß die Umsetzung bei einer Temperatur von 30 bis 75°C und bei einem pH von 5,5 bis 6,5 ausgeführt wird.

7. Verfahren nach Anspruch 1 oder 2, dadurch gekennzeichnet, daß die Umsetzung so lange fortgesetzt wird, bis das Reaktionsprodukt nicht über 0,03 Mol gebundenes Alkalimetall pro Mol Mangan enthält.

8. Verfahren nach Anspruch 1 oder 2, dadurch gekennzeichnet, daß die Umsetzung so lange fortgesetzt wird, bis das Reaktionsprodukt ungefähr 1 Mol gesamtes Seltenerdmetall der Ceroxid -Gruppe je 6 Mol Mangan enthält.

9. Verfahren nach Anspruch 1 oder 2, dadurch gekennzeichnet, daß die Seltenerd -Metallionen der Ceroxid-Gruppe vorwiegend aus Cer-, Lanthan- und Neodymionen zusammengesetzt sind.

10. Verfahren nach Anspruch 1, dadurch gekennzeichnet, daß die Katalysator-Pellets aus einer Paste, die eine Mischung aus dem Reaktionsprodukt in hydratisierter Form und wasserhaltigem Bentonit aufweist, hergestellt werden, wobei diese Paste zur Bildung von Pellets extrudiert wird und diese Pellets zu einer porösen, nicht agglomerierenden Beschaffenheit getrocknet werden.

11. Verfahren nach Anspruch 1, dadurch gekennzeichnet, daß die Katalysator-Pellets aus einer Paste, die eine Mischung aus dem Reaktionsprodukt in hydratisierter Form und einem teilweise peptisierten, hydratisierten Aluminiumoxidkatalysator-Träger aufweist, hergestellt werden, wobei diese Paste getrocknet wird, um Wasser zu entfernen.

12. Verfahren nach Anspruch 1, dadurch gekennzeichnet, daß die getrockneten, porösen Katalysator-pellets aus dem Reaktionsprodukt hergestellt werden, indem man aus einem Gemisch des Reaktionsprodukts in hydratisierter Form und einem teilweise peptisierten, teilchenförmigen, hydratisierten alpha-Aluminiumoxid eine Paste bereitet, die Paste zu Pellets extrudiert und die Pellets trocknet und kalziniert, um Wasser zu entfernen und das hydratisierte alpha-Aluminiumoxid in gamma-Aluminiumoxid umzuwandeln.